# EUROPÄISCHE PATENTANMELDUNG

(11) **EP 2 913 318 A1**
(43) Veröffentlichungstag der Anmeldung: **02.09.2015**
(21) Anmeldenummer: 15156679.1
(22) Anmeldetag: 26.02.2015
(51) Int. Cl.: C04B 41/45, C04B 41/48, C23C 18/04, C23C 18/12, C09D 103/02, C09D 105/00

(54) **Hocheffektives Beschichtungsverfahren von Partikeln auf einem Träger**

(30) Priorität: 28.02.2014 DE 102014102736
(71) Anmelder: JENOPTIK Katasorb GmbH, 07745 Jena (DE)
(72) Erfinder: Krech, Thomas, 07743 Jena (DE); Krippendorf, Ronald, 07743 Jena (DE); Präger, Marcus, 07743 Jena (DE)
(74) Vertreter: Schaller, Renate

(57) **Zusammenfassung**

Die Erfindung betrifft ein Verfahren zur Beschichtung eines Trägers. Das Verfahren ist mit
- einem Schritt A: Bereitstellen einer Suspension, die mindestens ein Saccharid und mindestens eine in Partikeln vorliegende Komponente enthält,
- einem Schritt B: Beschichten des Trägers mit der Suspension,
- einem Schritt C: Entfernen überschüssiger Suspension von dem beschichteten Träger und
- einem Schritt D: Erwärmen des beschichteten Trägers auf eine Erwärmungstemperatur,
dadurch gekennzeichnet, dass
- in einem Schritt E die Beschichtung getrocknet wird und ein Binden der mindestens einen Komponente durch das Saccharid und / oder seiner Zersetzungsprodukte bewirkt wird.

## Beschreibung

Die Erfindung betrifft ein hocheffizientes Beschichtungsverfahren von Trägern, bei dem Partikel einer Komponente auf dem Träger immobilisiert und gebunden werden.

Aus dem Stand der Technik sind verschiedene Verfahren zur Beschichtung von Trägern und zum Binden von Partikeln einer Komponente der Beschichtung auf den Trägern bekannt. Nachteilig an den aus dem Stand der Technik bekannten Verfahren ist, dass diese auf thermischer Sinterung beruhen. Dazu sind Temperaturen von 1200 bis 2000°C notwendig bei denen die oxidische oder metallische Komponente angeschmolzen wird. Für die Sinterung ist eine enorme thermische Energie notwendig. Ungünstigerweise können bei der Sinterung unkontrollierbare Zwischenprodukte oder, in Festkörpern, Zwischenphasen entstehen. Ist die Komponente ein Katalysator, führen die hohen Temperaturen durch die Sinterung zur Verkleinerung der Oberflächen und zu Aktivitätsverlusten des Katalysators (Aktivkomponente). Weiterhin sind diese Katalysatoren herstellungsbedingt weniger resistent gegen Katalysatorgifte. Ist die Komponente ein Adsorbens (ebenfalls eine Aktivkomponente), treten Adsorptionsverluste auf.

Beispielhaft sei hier die DE 10 2008 054 596 B4 genannt. Durch die DE 10 2008 054 596 B4 sind offenzellige Keramik- und Metallschaumkörper offenbart, die aus einem geschäumten Basismaterial bestehen. Das Basismaterial ist wenigstens teilweise mit einer Beschichtung versehen, die durch bestimmte Rauigkeiten gekennzeichnet ist. Zur Erzeugung einer solchen Beschichtung wird eine keramische Suspension hergestellt, in der Partikel mindestens einer Komponente enthalten sind. Ein zu beschichtender Schaumkörper (fortan: Träger) wird mit der Suspension bedeckt und überschüssige Suspension wird wieder entfernt. Der beschichtete Träger wird getrocknet und bei 1600°C gesintert. Anschließend wird eine weitere Suspension enthaltend Stahlpulver und Saccharidbinder auf den Träger aufgebracht. Es erfolgt erneut eine Trocknung und eine Sinterung unter Vakuum bei 1200°C.

Nachteilig an dem Verfahren der DE 10 2008 054 596 B4 ist aus den vorstehend genannten Gründen der obligatorische Sinterschritt bei Temperaturen oberhalb von 1200°C.

Der Erfindung liegt die Aufgabe zugrunde, eine schonende Möglichkeit für eine verbesserte Haftung und Immobilisierung einer Aktivkomponente auf einen Träger vorzuschlagen und dadurch einen Austrag der Aktivkomponente beim Einsatz als Katalysator oder Adsorbens in entsprechenden Systemen weitgehend zu verhindern.

Die Aufgabe wird durch ein Verfahren zur Beschichtung eines Trägers gelöst, das die folgenden Schritte aufweist: In einem Schritt A erfolgt das Bereitstellen einer Suspension, die mindestens ein Saccharid und mindestens eine in Partikeln vorliegende Komponente enthält. Das Saccharid ist vorzugsweise in einer Komponente der Suspension, beispielsweise in Wasser, gelöst. In einem Schritt B erfolgt ein Beschichten des Trägers mit der Suspension. In einem Schritt C wird überschüssige Suspension von dem beschichteten Träger entfernt, worauf in einem Schritt D ein Erwärmen des beschichteten Trägers auf eine Erwärmungstemperatur erfolgt. In einem Schritt E wird die Beschichtung getrocknet und ein Binden der mindestens einen Komponente durch das Saccharid und / oder seiner Zersetzungsprodukte bewirkt.

In einer vorteilhaften Ausgestaltung des erfindungsgemäßen Verfahrens werden die Schritte A bis C wie oben durchgeführt. In dem Schritt D wird das Erwärmen des beschichteten Trägers auf eine Erwärmungstemperatur oberhalb der Zersetzungstemperatur des mindestens einen Saccharids durchgeführt, wobei ein Binden der mindestens einen Komponente an den Träger bewirkt wird, indem die Erwärmungstemperatur mit höchstens 900°C gewählt wird und die Erwärmungstemperatur bis zur Zersetzung des mindestens einen Saccharids gehalten wird. Das Binden der mindestens einen Komponente an den Träger ist durch die entstehenden Zersetzungsprodukte bewirkt. Die Komponenten werden sicher und fest an den Träger gebunden, da die Zerfallsprodukte als Verbindungsmittel wirken und zudem Bindungen, insbesondere kovalente Bindungen, zwischen den Komponenten, den Zerfallsprodukten und dem Träger ausgebildet werden.

Beim Zersetzen des Saccharids können Verkokungen auftreten. Die Erwärmungstemperatur wird vorzugsweise solange gehalten, bis das Saccharid vollständig, beispielsweise mindestens als 50 Masse-% des eingesetzten Saccharids, zersetzt sind.

Durch das erfindungsgemäße Verfahren ist es vorteilhaft ermöglicht, Metalloxide (MO) und / oder Mischmetalloxide (MMO) auf einen Träger schonend aufzutragen und dort zu binden.

Es ist dabei günstig, wenn die Suspension nur Partikel einer mittleren Größe <10 µm, vorzugsweise <1 µm und am besten <0,1 µm enthält. Geringe Partikelgrößen erlauben eine gleichmäßige Verteilung der Partikel sowie deren gleichmäßige und vollständige Erwärmung auf die Erwärmungstemperatur.

Katalysatoren sind Partikel in einem Bereich von 0,1 nm bis 100 µm, beispielsweise in einem Bereich von 1 nm bis 100 µm. Adsorbentien sind Partikel der Größe von 1 nm bis 2 mm.

Der Kern der Erfindung ist in der Möglichkeit zu sehen, die mindestens eine Komponente bei vergleichsweise niedrigen Temperaturen an den Träger zu binden. Da für ein sicheres Binden keine Sintertemperaturen von 1200°C und darüber erforderlich sind, wie dies aus dem Stand der Technik bekannt ist, werden die Komponenten thermisch weniger belastet. Sind die Komponenten Katalysatoren, wird durch das erfindungsgemäße Verfahren erreicht, dass die Aktivität der Katalysatoren weitgehend erhalten bleibt und aufgrund der geringeren thermischen Beanspruchung das Spektrum möglicher verwendbarer Komponenten stark erweitert wird.

Die Erwärmungstemperatur wird vorzugsweise aus einem Temperaturbereich von 120°C bis einschließlich 400°C gewählt. Als verwendbare Saccharide seien beispielhaft Glucose und Stärke genannt, die bei 146°C beziehungsweise bei 200°C zersetzt werden. Die Erwärmungstemperatur wird günstigerweise aus einem Temperaturbereich von 200°C bis einschließlich 400°C gewählt wird, um eine sichere Zersetzung der Saccharide bei gleichzeitiger Schonung der zu bindenden mindestens einen Komponente zu gewährleisten.

Die wenigstens eine Komponente ist aus einer Gruppe umfassend Metalloxide, Mischmetalloxide, Mischoxide, Metalle, Metallnitrate, Metallhalogenide, Metallhydroxide, Metallcarbonate, Zeolithe, Kohlenstoffmodifikationen wie Aktivkohle und Metallorganoverbindungen sowie Kombinationen aus den genannten Stoffklassen ausgewählt.

Das mindestens eine Saccharid ist aus einer Gruppe umfassend Monosaccharide, Disaccharide, Oligosaccharide und Polysaccharide ausgewählt oder ist eine Mischung dieser.

Das Entfernen der überschüssigen Suspension in Schritt C erfolgt vorteilhaft durch Ausblasen mittels eines Gasstroms. Wird zum Ausblasen ein heißer Gasstrom verwendet, kann vorteilhaft das Entfernen der überschüssigen Suspension mit dem Erwärmen in Schritt D verbunden werden. Auch wenn mittels des heißen Gasstroms keine Erwärmung auf die festgelegte Erwärmungstemperatur erreicht werden sollte, wird das Erwärmen in Schritt D durch die Verringerung der vorliegenden Temperaturdifferenz zwischen aktueller Temperatur und Erwärmungstemperatur unterstützt. Die entfernte Suspension kann bei einem mechanischen Entfernen in den meisten Fällen wiederverwendet werden.

Das erfindungsgemäße Verfahren kann so ausgestaltet sein, dass der Träger vor dem Beschichten mit der Suspension vorbehandelt wird, indem der Träger mit einer Lösung eines als Substrat dienenden Stoffs oder Stoffgemischs beschichtet wird, das Substrat wenigstens anteilig auf den Träger aufgelagert und das aufgelagerte Substrat unter Anwesenheit eines Oxidationsmittels in ein Oxid umgewandelt (oxidiert) wird. Dabei wird unter dem Begriff "Auflagern" beispielsweise ein Ablagern oder ein Auffällen verstanden. Die Lösung des als Substrat dienenden Stoffs oder Stoffgemischs kann Partikel enthalten und somit eine Suspension sein.

Für die Durchführung des erfindungsgemäßen Verfahrens wird bevorzugt ein Träger verwendet, dessen Material eine Siliziumverbindung enthält, z.B. SiO₂, Mischungen aus SiO₂ mit Al₂O₃, Silikate wie Cordierit und Siliziumcarbid, oder Siliziumcarbid ist. Zudem enthält die Lösung vorzugsweise ein Oxidationsmittel und eine Vorstufe eines Siliziumoxids. Die Umwandlung des aufgelagerten Substrats in ein Oxid erfolgt bei einer Temperatur von beispielsweise wenigstens 900°C.

Die Lösung enthält vorteilhaft gelöstes Aluminium und / oder Aluminiumpartikel als Substrat. Die Umwandlung des aufgelagerten Substrats in ein Oxid erfolgt dann bei einer Temperatur von beispielsweise wenigstens 200°C.

Um eine effektive Erwärmung zu erreichen und um keine Verbrennungsgase oder Verbrennungsrückstände mit der Beschichtung, der mindestens einen Komponente und / oder dem Träger in Kontakt gelangen zu lassen, kann in dem Schritt D die Erwärmung auf die Erwärmungstemperatur mikrowellenassistiert erfolgen. Die Erwärmung kann in weiteren Ausgestaltungen des erfindungsgemäßen Verfahrens auch durch die Wirkung von Heißgas oder durch Induktion erfolgen. Es können verschiedene Erwärmungsverfahren miteinander kombiniert werden.

Eine vorteilhafte Ausgestaltung einer mikrowellenassistierten Erwärmung ist gegeben, indem innenliegende Bereiche der Beschichtung und gegebenenfalls des Trägers mittels einer Bestrahlung mit Mikrowellen erwärmt wird (interne Energiezufuhr), während außenliegende Bereiche vorrangig durch eine Energiezufuhr von außen (externe Energiezufuhr) erwärmt werden. Durch eine solche Kombination ist eine schnelle und vor allem eine Erwärmung mit geringen Wärmespannungen von Träger und Beschichtung erreichbar.

Es ist zudem möglich, dass ein definierter Sauerstoffanteil in der während des Bindens der Komponente herrschenden Atmosphäre eingestellt werden kann. Bei einem Sauerstoffanteil von 0% Sauerstoff kann inert mit beispielsweise Stickstoff oder reduktiv mit beispielsweise Wasserstoff gearbeitet werden. Der Sauerstoffanteil ist für die Art der Ausbildung des Anionengitters wichtig. Je nach Material der Komponente kann im Festkörper ein Anionenüberschuss oder Anionendefizit für die späteren Verwendungseigenschaften von Vorteil sein. Um einen gewünschten verminderten Sauerstoffanteil im Endprodukt zu erreichen, wird der Sauerstoffanteil in der Atmosphäre in einem Bereich von 0 bis einschließlich 23% gewählt. Soll der gewünschte Sauerstoffanteil im Endprodukt erhöht sein, wird vorzugsweise ein Sauerstoffanteil in der Atmosphäre in einem Bereich von 77 bis einschließlich 100% gewählt.

Je nach gewünschter Mobilität des Sauerstoffionengitters kann die Erwärmungstemperatur angepasst werden. In der Katalyse ist eine hohe Mobilität und damit niedrige Erwärmungstemperatur von Vorteil, bei Farbstoffen oder elektrisch leitenden Schichten hohe Temperaturen. Aus unseren Untersuchungen ist bekannt, dass bei Co-Spinell Sintererscheinungen ab 400°C auftreten. Dadurch wird Sauerstoff aus dem Anionengitter des Spinells ausgelagert, die katalytische Aktivität nimmt ab. Das gleiche geschieht bei Perowskiten bei höheren Temperaturen ab 650°C. Bei der höheren Temperatur sintern die Teilchen des Pulvers immer mehr zusammen, verschmelzen und ergeben eine Schicht. Ebenso werden durch die höheren Temperaturen Porensysteme zerstört oder teilweise zerstört.

Das erfindungsgemäße Verfahren kann so durchgeführt werden, dass pro Liter Trägervolumen <500 g , besser < 250 g, bevorzugt < 150 g Suspension als Beschichtung aufgetragen werden.

Durch das erfindungsgemäße Verfahren ist es ebenfalls möglich auf einem beliebigen Träger direkt eine Gamma-Al₂O₃-, CeO₂-, SiO₂,-, TiO₂-, Silikat- und/oder eine Mullit-Schicht oder deren Mischungen aufzutragen. Diese Schicht ermöglicht eine bessere Haftung der wenigstens einen Komponente (Aktivkomponente) durch Vergrößerung der Oberfläche. Zudem beeinflusst diese Schicht die katalytische Aktivität und kann sie resistenter gegen Katalysatorgifte werden lassen.

Träger sind alle Formkörper. Ausführungen von Formkörpern sind beispielsweise Platten, Monolithe, Granulate. Diese können aus keramischen und/oder metallischen Materialien bestehen und beispielsweise Metalle, Siliciumcarbid (SiC), Metalloxide (MO), Mischmetalloxide (MMO) inklusive Spinelle und Perowskite, konkreter Cordierit, Gläser, AL₂O₃, SiO₂ oder Mischungen dieser sein.
Weiterhin beinhaltet das erfindungsgemäße Verfahren bei der Nutzung von Schaumkörpern als Träger die Beschichtung mit MO oder MMO in Form von Spinellen, Perowskiten oder Zeolithen. Diese finden Anwendung in der Katalyse beispielsweise zur katalytischen Nachverbrennung von Abgasen oder bei Adsorb- bzw. Absorbentien bei der Adsorption bzw. Absorption.

Das aufgezeigte Beschichtungsverfahren ist unabhängig von der Struktur des Trägers und dem Trägermaterial, beispielsweise dessen Oberflächenbeschaffenheit, z. B. deren Rauheit. Ebenso kann eine Fülle von Materialien verwendet werden, die als Beschichtung auf den Träger aufgebracht werden können. Äußerst vorteilhaft ist dabei die nahezu vollständige Erhaltung der katalytischen oder adsorptiven Eigenschaften der mindestens einen Komponente (Aktivkomponente) infolge wesentlich geringerer Wärmezuführung beim Binden. Gleichzeitig wird vorteilhaft eine Oberflächenvergrößerung und eine Haftverbesserung erreicht.

Mittels des erfindungsgemäßen Verfahrens ist eine Beschichtung von Trägerstrukturen (auch: Träger) möglich. Im Fall einer Beschichtung von als Träger dienenden Schäumen erfolgt die Beschichtung vorzugsweise mit Metalloxiden und Mischmetalloxiden (Perowskite und Spinelle) sowie mit als Adsorbentien wirkenden MOF (Metal-organic-frameworks, Metall-organische Gerüste) bzw. Metallorganischen Verbindungen. MOF können zwei- oder dreidimensionale Strukturen bilden. MOF's sind gut in definierten zwei- oder dreidimensionale Strukturen herstellbar und weisen eine sehr große spezifische Oberfläche auf. Sie sind aber empfindlich gegenüber hohen Temperaturen.

Die Erfindung beruht wesentlich auf einer Verklebung und einer Zersetzung von Sacchariden und gegebenenfalls weiteren Additiven.

Beispielsweise erfolgt bei der Verwendung von Stärke als Saccharid eine Erwärmung auf z. B. nur 200°C (Erwärmungstemperatur). Die Zersetzungstemperatur von Stärke wird dabei erreicht. Es treten lokale Erhitzungen und gleichzeitige Verklebung bzw. Versinterung des Saccharids und / oder der Partikel der mindestens einen Komponente mit der Trägeroberfläche auf. Alternativ können auch andere, insbesondere organische, wasserlösliche, Polymere mit gleichen oder ähnlichen funktionellen Gruppen wie die der Saccharide, wie zum Beispiel Polyethylenglycol und Polyvinylalkohol, verwendet werden können.

Das erfindungsgemäße Verfahren weist allgemein die folgenden vier Schritte auf
- Herstellen einer Suspension und Bereitstellen dieser (Schritt A),
- Auftragen z.B. durch Tauchen, Aufsprühen, Gießen oder anderer geeigneter Verfahren oder eine Kombination dieser Methoden, der Suspension auf den Träger (Schritt B),
- mechanische Abtrennung des Überschusses der Suspension, auch um Verstopfungen zu vermeiden, beispielsweise mittels Schwerkraft, Schleudern, Zentrifugieren, Ausblasen, Rütteln, Abstreichen oder mittels einer Kombination dieser Methoden (Schritt C) und
- Erwärmen der Beschichtung und gegebenenfalls des gesamten beschichteten Trägers auf die im Vergleich zu anderen Verfahren geringere Erwärmungstemperatur (Schritt D).

Es ist möglich, mehrere Lagen der Beschichtung auf den Träger aufzubringen. Dazu können in einer Ausgestaltung des erfindungsgemäßen Verfahrens die Schritte A bis C mehrfach wiederholt werden. Mit der Durchführung des Schrittes D wird des Verfahren abgeschlossen,

In einer weiteren Ausgestaltung des erfindungsgemäßen Verfahrens werden die Schritte A bis D mehrmals wiederholt.

Bei der Herstellung mehrerer Lagen der Beschichtung kann jedes Mal die gleiche Suspension verwendet werden. Es ist auch möglich, verschiedene Suspensionen zu verwenden. Außerdem können unterschiedliche Erwärmungstemperaturen gewählt und eingestellt werden, um die gewünschten Eigenschaften der einzelnen Lagen, beispielsweise die Poreneigenschaften, zu beeinflussen.

Bei der Herstellung der Suspension kann die Viskosität der Suspension entsprechend der Art des Träger, des Materials und der Abtrennmethode, der Pulverart, des Pulvermaterials, der Partikelgrößenverteilung, der Haftkraft, der gewünschten Oberfläche und weiterer Bedingungen angepasst werden.

Es werden nachfolgend Ausführungsbeispiele der Erfindung angegeben.

### Ausführungsbeispiel 1

Die Suspension wird aus 1 bis 25 Ma.-% Stärkelösung, 49-80 Ma.-% Mischmetalloxid als in Partikeln vorliegende Komponente und 5-50 Ma.-% entionisiertes Wasser hergestellt. Der Träger wird mittels Dip-Drop Verfahren mit der Suspension beschichtet. Überschüssige Suspension wird durch Abblasen entfernt. Die Beschichtung wird auf eine Erwärmungstemperatur ausgewählt aus einem Bereich zwischen 200 und 400°C erwärmt und bis zur vollständigen Zersetzung der Stärke auf der Erwärmungstemperatur gehalten.

Nach dem Binden der Partikel der Komponente an den Träger kann optional eine Sinterung des beschichteten Trägers und der gebundenen Partikel durchgeführt werden.

Dabei kann die Sinterung bei verschiedenen Sinterungstemperaturen ausgewählt aus einem Bereich von 100 bis 2000°C durchgeführt werden. Während eine Sinterung von silikatischen Komponenten bei Temperaturen von rund 2000°C erfolgen kann, erfolgt diese bei rund 600°C bei Spinellen, bei rund 1200°C bei Perowskiten und bei rund 600 - 800°C bei Edelmetallen.

Die Suspension kann zusätzliche Additive enthalten. Zur Erhöhung der katalytischen Aktivität und / oder der Schwefelresistenz kann eines oder mehrere der folgenden Additive bei der Herstellung der Suspension (Schritt A) beigemischt werden: SSiC-Pulver, SiO₂, Al₂O₃ und CeO₂ /oder TiO₂ und Metalle, insbesondere Edelmetalle und Promotoren z. B. Alkalimetalle und Erdalkalimetalle z. B. Kalium. Die Additive in der Suspension wirken sich ebenfalls positiv auf die Größe der Oberfläche aus. Zur Erhöhung der Haftfestigkeit können Chelatbildner, Ester und Ether, Carbonsäuren und / oder Alkohole, beispielsweise Zitronensäure, Ethoxyethanol oder Polyvinylalkohol, als Additive zugesetzt werden. Additive können können zudem Emulgatoren und / oder Stabilisatoren sein, durch die ein ungewolltes Ausfällen der Saccharide vermieden wird. Additive unterstützen beispielsweise dem Sauerstofftransport an aktive Zentren der Katalysatoren und können Resistenzen gegen Katalysatorgifte bewirken.

Als Additive können außerdem halogenierte Verbindungen, beispielsweise halogenierte Salze verwendet werden. Halogenierte Salze sind beispielsweise Fluoride wie Natriumfluorid, Bromide oder Chloride. Durch diese Additive kann, je nach Oberfläche und verwendeten Stoff, die erforderliche Zeit für die Einstellung des chemischen Gleichgewichts der katalysierten Reaktionen in späteren Anwendungen von Trägern reduziert werden, die mittels des erfindungsgemäßen Verfahrens beschichtet wurden.

Alternativ ist es möglich Ceroxid (CeO₂) als Additive zu verwenden. Durch Ceroxid wird die Sauerstoffmobilität erhöhte und eine höhere Reaktivität der als Katalysator wirkenden Aktivkomponente erreicht. Es kann die Oberfläche, die Resistenz gegen Katalysatorgifte und die Brönsted- und Lewis-Acidität verändert und so bestimmte Reaktionen gefördert werden.

### Vorbehandlungsvarianten des Trägers

Zur zusätzlichen Vergrößerung der Oberfläche, Erhöhung des Haftvermögens und der Rauheit kann eine Zwischenschicht auf den Träger aufgebracht werden.

Die Vorbehandlungsvariante ist eine Fixierung eines Stoffes auf einer Oberfläche, die durch eine Lösung (basisch oder sauer) eines Substrates erfolgt. Dabei wird das umgewandelte Substrat in Form eines Intermediates auf die Oberfläche des Trägers aufgefällt. Durch Zufuhr thermischer Energie wird das Intermediat in oxidativer Atmosphäre in ein Oxid umgewandelt. Die aufgefällten Partikel sind so klein und fein, dass es zu einer Oberflächenvergrößerung kommt, die der eigentlichen Beschichtung mehr Platz und Haftmöglichkeiten bietet.

In einem ersten Beispiel einer Vorbehandlung zur Erhöhung der Rauigkeit und Vergrößerung der Oberfläche vor einer Beschichtung wird SiO₂ oder Mischungen davon verwendet.

Kaliumpermanganat wird als Oxidationsmittel eingesetzt. Als Substrat wird Tetraethylorthosilikat verwendet, aus dem durch Oxidation eine SiO₂-Schicht entsteht. Bei diesem Verfahren wird ein SSiC-Schaumkörper (SSiC = sintered siliciumcarbide; gesintertes Siliziumkarbid) durch ein Einwirken bei einer Temperatur von 1100°C bis 2000°C thermisch oxidiert. Dadurch entsteht an der Oberfläche eine SiO₂-Schicht. Diese bewirkt wiederum eine bessere Haftung der Aktivkomponente.

In einem zweiten Beispiel einer Vorbehandlung zur Erhöhung der Rauigkeit und Vergrößerung der Oberfläche vor einer Beschichtung wird mit Al₂O₃ oder Mischungen davon verwendet.

Es wird eine basische-Lösung (Lauge), mit einer Konzentration beispielsweise ausgewählt aus einem Bereich einer 0,1 Molaren bis zu einer konzentrierten NaOH-Lösung, angesetzt und der Träger in diese basische Lösung eingetaucht. Es folgt eine Erwärmung der Lösung auf eine Temperatur zwischen 20 und 80°C, um das Anrauverhalten der Trägeroberfläche zu erhöhen. Dabei soll ein Kochen der Lösung vermieden werden, um eine räumlich gleichmäßige Reaktion sicherzustellen. Aluminiumpulver oder Aluminiumgranulat wird in Anteilen von 0,5 bis 5 Masseprozent zur Lösung gegeben. Das Aluminium wird teilweise gelöst. Durch eine darauffolgende Temperaturerniedrigung kommt es zur Ablagerung bzw. Auffällung des gelösten Aluminiumintermediates auf der Oberfläche des Trägers. Der Träger verbleibt zwischen 1 und 72 Stunden im dem Bad, wobei die Lösung gerührt werden kann. Die Verweildauer und das Rühren beeinflussen die Schichtdicke des aufgefällten Materials auf den Träger. Im Anschluss wird mit viel Wasser der Träger und die aufgefällte Schicht neutralisiert, getrocknet und zwischen 200 und 2000°C über einen Zeitraum zwischen 0,5 und 48 Stunden, vorzugsweise zwischen 0,5 bis 2 Stunden, kalziniert.

Alternativ ist es möglich, eine starke Säure, z. B. Chlorsäure, Flusssäure, Schwefelsäure, Salpetersäure, Perchlorsäure, Phosphorsäure und deren Mischungen, statt einer Lauge zu verwenden.

Die beiden vorgenannten Vorbehandlungen können einzeln oder in Kombination miteinander an einem Träger durchgeführt werden.

## Patentansprüche

1. Verfahren zur Beschichtung eines Trägers mit
- einem Schritt A: Bereitstellen einer Suspension, die mindestens ein Saccharid und mindestens eine in Partikeln vorliegende Komponente enthält,
- einem Schritt B: Beschichten des Trägers mit der Suspension,
- einem Schritt C: Entfernen überschüssiger Suspension von dem beschichteten Träger und
- einem Schritt D: Erwärmen des beschichteten Trägers auf eine Erwärmungstemperatur,
**dadurch gekennzeichnet, dass**
- in einem Schritt E die Beschichtung getrocknet wird und ein Binden der mindestens einen Komponente durch das Saccharid und / oder seiner Zersetzungsprodukte bewirkt wird.

2. Verfahren zur Beschichtung eines Trägers mit
- dem Schritt A: Bereitstellen einer Suspension, die mindestens ein Saccharid und mindestens eine in Partikeln vorliegende Komponente enthält,
- dem Schritt B: Beschichten des Trägers mit der Suspension,
- dem Schritt C: Entfernen überschüssiger Suspension von dem beschichteten Träger und
- dem Schritt D: Erwärmen des beschichteten Trägers auf eine Erwärmungstemperatur oberhalb der Zersetzungstemperatur des mindestens einen Saccharids,
**dadurch gekennzeichnet, dass**
- in dem Schritt E ein Binden der mindestens einen Komponente an den Träger bewirkt wird, indem die Erwärmungstemperatur mit höchstens 900°C gewählt wird und
- die Erwärmungstemperatur bis zur Zersetzung des mindestens einen Saccharids gehalten wird.

3. Verfahren nach Anspruch 1 oder 2, **dadurch gekennzeichnet, dass** die Suspension nur Partikel einer mittleren Größe <10 µm, vorzugsweise <1 µm und am besten <0,1 µm enthält.

4. Verfahren nach einem der Ansprüche 1 bis 3, **dadurch gekennzeichnet, dass** die Erwärmungstemperatur aus einem Temperaturbereich von 120°C bis einschließlich 400°C gewählt wird.

5. Verfahren nach Anspruch 4, **dadurch gekennzeichnet, dass** die Erwärmungstemperatur aus einem Temperaturbereich von 200°C bis einschließlich 400°C gewählt wird.

6. Verfahren nach einem der Ansprüche 1 bis 5, **dadurch gekennzeichnet, dass** die wenigstens eine Komponente ausgewählt aus einer Gruppe umfassend Metalloxide, Mischmetalloxide, Mischoxide, Metalle, Metallnitrate, Metallhalogenide, Metallhydroxide, Metallcarbonate, Zeolithe, Kohlenstoffmodifikationen, wie Aktivkohle und Metallorganoverbindungen sowie Kombinationen aus den genannten Stoffklassen ist.

7. Verfahren nach einem der vorhergehenden Ansprüche, **dadurch gekennzeichnet, dass** das mindestens eine Saccharid aus einer Gruppe umfassend Monosaccharide, Disaccharide, Oligosaccharide und Polysaccharide oder eine Kombination aus diesen ausgewählt ist.

8. Verfahren nach einem der vorhergehenden Ansprüche, **dadurch gekennzeichnet, dass** das Entfernen der überschüssigen Suspension in Schritt C durch Ausblasen mittels eines Gasstroms erfolgt.

9. Verfahren nach einem der vorhergehenden Ansprüche, **dadurch gekennzeichnet, dass** vor dem Beschichten des Trägers mit der Suspension der Träger vorbehandelt wird, indem der Träger mit einer Lösung eines als Substrat dienenden Stoffs oder Stoffgemischs beschichtet wird, das Substrat wenigstens anteilig auf den Träger aufgelagert und das aufgelagerte Substrat unter Anwesenheit eines Oxidationsmittels in ein Oxid umgewandelt wird.

10. Verfahren nach Anspruch 9, **dadurch gekennzeichnet, dass** ein Träger verwendet wird, dessen Material eine Siliziumverbindung enthält oder Siliziumcarbid ist; die Lösung ein Oxidationsmittel und eine Vorstufe eines Siliziumoxids enthält und die Umwandlung des aufgelagerten Substrats in ein Oxid bei einer Temperatur von wenigstens 900°C erfolgt.

11. Verfahren nach Anspruch 9, **dadurch gekennzeichnet, dass** die Lösung gelöstes Aluminium und / oder Aluminiumpartikel als Substrat enthält und die Umwandlung des aufgelagerten Substrats in ein Oxid bei einer Temperatur von wenigstens 200°C erfolgt.

12. Verfahren nach einem der Ansprüche 1 bis 8, **dadurch gekennzeichnet, dass** die in Schritt D die Erwärmung auf die Erwärmungstemperatur mikrowellenassistiert erfolgt.

13. Verfahren nach einem der vorhergehenden Ansprüche, **dadurch gekennzeichnet, dass** ein Sauerstoffanteil in der bei dem Binden herrschenden Atmosphäre entweder aus einem Bereich von 0 bis einschließlich 23% oder aus einem Bereich von 77 bis einschließlich 100% gewählt wird.

14. Verfahren nach einem der vorhergehenden Ansprüche, **dadurch gekennzeichnet, dass** pro Liter Trägervolumen <500 g , besser < 250 g, bevorzugt < 150 g Suspension als Beschichtung aufgetragen werden.
